# EUROPEAN PATENT APPLICATION

(11) **EP 4 667 670 A1**
(43) Date of publication of application: **24.12.2025**
(21) Application number: 24755973.5
(22) Date of filing: 30.01.2024
(51) Int. Cl.: E03D 9/08

(54) **CLEANING ASSEMBLY**

(30) Priority: 14.02.2023 CN 202310115559
(71) Applicant: Quanzhou Komoo Intelligent Kitchen & Bath Co., Ltd, Quanzhou, Fujian 362308 (CN)
(72) Inventor: LIN, Xiaofa, Quanzhou, Fujian 362308 (CN); LIN, Xiaoshan, Quanzhou, Fujian 362308 (CN); LIU, Zuhua, Quanzhou, Fujian 362308 (CN); LIN, Shan, Quanzhou, Fujian 362308 (CN); XU, Yanxin, Quanzhou, Fujian 362308 (CN)
(74) Representative: Verscht, Thomas Kurt Albert
(86) International application number: PCT/CN2024/074736
(87) International publication number: WO 2024/169599

(57) **Abstract**

A cleaning assembly, comprising a support and a spray rod portion which can extend and retract on the support. A self-cleaning assembly is mounted at the front end of the spray rod portion, and the self-cleaning assembly comprises an upper cover and a pressing plate; a cleaning hole is formed on the upper cover, one end of the pressing plate is hingedly connected to the lower end of the upper cover, a reset device is provided between the pressing plate and the upper cover, a descaling member is further mounted on the pressing plate, and a limiting portion is provided on the support; during the extension and retraction of the spray rod portion, the pressing plate abuts against the limiting portion, so that the pressing plate swings upwards around the position where the pressing plate is hingedly connected to the upper cover, and thus the descaling member is inserted into the cleaning hole, and after the pressing plate is separated from the limiting portion, the descaling member is pulled away from the cleaning hole by the reset device.

## Description

### CROSS-REFERENCE TO RELATED APPLICATIONS

This application claims priority to Chinese patent application submitted to China National Intellectual Property Administration on February 14, 2023 with application number 202310115559.8 and a title of the disclosure "A cleaning assembly", and the content of this Chinese patent application is incorporated herein as a part of this application.

### FIELD OF THE DISCLOSURE

The present disclosure relates to the technical field in self-cleaning nozzles, and in particular relates to a cleaning assembly for a toilet.

### BACKGROUND OF THE DISCLOSURE

At present, smart toilets and toilet seat covers have become one of the key hardware to take into account in bathroom decoration, however, there are huge differences in water quality across various regions in China, scale deposition due to water quality issues often occur, especially in hard water regions, eventually leading to a failure of a water outflow pipeline in the smart toilet seat covers, and this poses a huge challenge to the use of the smart toilets.

Therefore, a self-cleaning function is used as one of the core functions of the smart toilet seats for various enterprises for researching and developing bathroom fixtures, and water is heated after entering a water passage system in the smart toilet seat covers and then sprayed out from cleaning holes on a front end, thus achieving the self-cleaning function of nozzles. However, water in the hard water regions contains a large amount of calcium and magnesium ions, which easily form scale after heating, as the scale is continually forming during the use of the smart toilets, blockage of the cleaning holes is easily caused, resulting in a failure of the self-cleaning function of the smart toilet seat covers. Therefore, how to effectively and promptly dredge and clean the cleaning holes is one of the pain points in the industry.

Chinese patent application 201921610541.0 discloses a self-cleaning flushing device for a human body, during an extension-retraction process, a self-cleaning water passage sprays water to the nozzles, cleaning elements and the nozzles rub each other to clean the nozzles, however, this patent application can only be used to clean outer surfaces of the nozzles and cannot remove scale from deep inside of the nozzles.

### BRIEF SUMMARY OF THE DISCLOSURE

An objective of the present disclosure is to provide a cleaning assembly to solve the deficiencies in the existing techniques.

In order to achieve the aforementioned objective, the technical solution of the present disclosure is as follows.

A cleaning assembly, the cleaning assembly comprises a bracket and a spray bar portion configured to extend and retract on the bracket, characterized in that, a front end of the spray bar portion is disposed with a self-cleaning assembly configured to extend and retract accordingly, the self-cleaning assembly comprises an upper cover and a pressure plate, the upper cover comprises one or more cleaning holes and a slot, one end of the pressure plate is pivotally connected to an inner side of the slot and is located on an outer side of the upper cover, an actuating portion is disposed on another end of the pressure plate, a reset device is disposed between the pressure plate and the upper cover, one or more descaling pieces are further disposed on the pressure plate, a position-limiting portion configured to abut the actuating portion is disposed on the bracket, the position-limiting portion is located on a path along which the self-cleaning assembly extends and retracts with the spray bar portion; and when the spray bar portion drives the self-cleaning assembly to extend and retract, the actuating portion of the pressure plate abuts the position-limiting portion, causing the pressure plate to swing around the slot in a direction towards the upper cover, thus inserting the one or more descaling pieces into the one or more cleaning holes, when the actuating portion is separated from the position-limiting portion in a continuous extension-retraction process, and the reset device pulls the one or more descaling pieces out of the one or more cleaning holes completely.

Further, the pressure plate is pivotally connected to a bottom of the upper cover through the slot, and the actuating portion is disposed on a lower end surface of the pressure plate, so that the pressure plate is configured to abut the position-limiting portion when extending and retracting with the spray bar portion, thereby pushing the pressure plate with the another end swinging about the slot in the direction towards the upper cover.

Further, driving surfaces are disposed on front and rear sides of the actuating portion along an extension-retraction direction of the pressure plate, and heights of the driving surfaces are higher than that of the position-limiting portion.

Further, the driving surfaces comprise a first driving surface and a second driving surface, and a transition portion is connected to the first driving surface and the second driving surface; when the spray bar portion extends, the position-limiting portion abuts and pushes the first driving surface to allow the pressure plate to swing upward; when the spray bar portion retracts, the position-limiting portion abuts and pushes the second driving surface to allow the pressure plate to swing upward; and when the transition portion abuts the position-limiting portion, the pressure plate swings upward to a highest point.

Further, a guide portion is disposed on a front end of the bracket, the guide portion comprises a guide hole configured to allow the spray bar portion to extend and retract, and at least part of an inner wall surface of a bottom of the guide hole constitutes the position-limiting portion.

Further, the pressure plate comprises one or more first installation positions and a second installation position, the one or more first installation positions are away from the one end of the pressure plate pivotally connected to the slot and are used for installing the one or more descaling pieces, and the second installation position is adjacent to the one end of the pressure plate pivotally connected to the slot and is used for installing the reset device.

Further, one or more sealing pieces are buckled into the one or more first installation positions, and the one or more sealing pieces are sleeved on one or more lower portions of the one or more descaling pieces.

Further, a lower end of the upper cover is connected to a lower cover, the lower cover comprises one or more through holes and an accommodating groove, the one or more sealing pieces slidably and hermetically cooperate with one or more inner sides of the one or more through holes, and the accommodating groove cooperates with the second installation position to fix an upper end and a lower end of the reset device respectively.

Further, one or more parts of the one or more sealing pieces disposed in the one or more through holes are Y-shaped.

Further, a front end of the lower cover comprises a fixing portion, the one end of the pressure plate comprises a first buckle, the another end comprises a second buckle, the second installation position is adjacent to the first buckle, the actuating portion and the one or more first installation positions are adjacent to the second buckle, and the first buckle is pivotally connected to the slot, and the second buckle is overlapped with the fixing portion.

Further, the fixing portion comprises two buckles with opposite hooks, and the second buckle comprises a fixing surface overlapped with the hooks.

Further, an upper end of the upper cover comprises a third installation position for installing a nozzle cover, and the nozzle cover comprises nozzles in communication with the one or more cleaning holes.

The present disclosure has the following advantages.
1. In the cleaning assembly proposed by the present disclosure, the self-cleaning assembly is disposed on the front end of the spray bar portion and extends and retracts with the spray bar portion to move forward and backward, and the position-limiting portion is disposed on the path along which the self-cleaning assembly extends and retracts. During a movement process, the actuating portion of the pressure plate can abut the position-limiting portion, causing the pressure plate to swing around the one end pivotally connected to the upper cover, thus inserting the one or more descaling pieces on the pressure plate into the one or more cleaning holes, and when the actuating portion of the pressure plate is separated from the position-limiting portion, the reset device pulls the one or more descaling pieces out of the one or more cleaning holes completely; and the actuating portion of the pressure plate respectively abuts the position-limiting portion during an extension-retraction process, so that the position-limiting portion respectively pushes the pressure plate to swing in the direction towards the upper cover during the extension-retraction process of the pressure plate, thus respectively inserting the one or more descaling pieces into the one or more cleaning holes during the extension-retraction process. Therefore, the one or more descaling pieces can clean the one or more cleaning holes twice in a single extension-retraction cycle of the spray bar portion, effectively preventing scaling in the one or more cleaning holes.
2. In the cleaning assembly proposed by the present disclosure, the actuating portion is disposed on the bottom of the front end of the pressure plate, the driving surfaces are disposed on the front and rear sides of the actuating portion along the extension-retraction direction of the pressure plate, the driving surfaces are higher than the position-limiting portion, facilitating the position-limiting portion to push the pressure plate to swing through the driving surfaces; since the driving surfaces are disposed on both of the front and rear sides of the actuating portion along the extension-retraction direction, the position-limiting portion respectively pushes the pressure plate to allow the one or more descaling pieces to be inserted into the one or more cleaning holes during the extension-retraction process of the spray bar portion; therefore, the one or more cleaning holes are dredged and cleaned before and after every time the spray bar portion is used.
3. In the cleaning assembly proposed by the present disclosure, the driving surfaces comprise the first driving surface and the second driving surface, and the transition portion is connected to the first driving surface and a second driving member; when of the spray bar portion extends, the position-limiting portion pushes the pressure plate to swing upward through the first driving surface; when the spray bar portion retracts, the position-limiting portion pushes the pressure plate to swing upward through the second driving surface; and when the transition portion abuts the position-limiting portion, the pressure plate swings upward to the highest point.
4. In the cleaning assembly proposed by the present disclosure, the reset device is disposed between the pressure plate and the lower cover to ensure that the one or more descaling pieces can return to the initial position after being inserted into the one or more cleaning holes for dredging and cleaning, and the second installation position of the pressure plate and the accommodating groove of the lower cover fix the lower end and the upper end of the reset device respectively to ensure that the position of the reset device does not dislocate during the operation process.
5. In the cleaning assembly proposed by the present disclosure, one or more sealing pieces are sleeved outside of the one or more descaling pieces, and the one or more sealing pieces are buckled on the pressure plate; and the one or more sealing pieces slidably and hermetically cooperate with the one or more inner sides of the one or more through holes of the lower cover, and the one or more parts of the one or more sealing pieces located in the one or more through holes are Y-shaped, thus reducing frictional resistance forces of the one or more sealing pieces with the one or more inner walls of the one or more through holes during the sliding process while ensuring sealing.
6. In the cleaning assembly proposed by the present disclosure, the one end of the pressure plate comprises the first buckle, the another end comprises the second buckle, and the first buckle is pivotally connected to an inner side of the slot, allowing the pressure plate to swing around the slot; and the lower end of the lower cover comprises the fixing portion configured to allow the second buckle to be overlapped, and the fixing portion is used to limit the initial position of the pressure plate.

### BRIEF DESCRIPTION OF THE DRAWING

In order to more clearly illustrate the technical solutions in the embodiments of the present disclosure or in the existing techniques, the accompanying drawings used in the description of the embodiments or the existing techniques will be briefly introduced below, it is obvious that the accompanying drawings described below are only some embodiments of the present disclosure, and other accompanying drawings can be obtained by those of skill in the art based on these drawings without creative efforts.
FIG. 1 illustrates a diagrammatic view of a cleaning assembly of the present disclosure;
FIG. 2 illustrates an exploded view of the cleaning assembly of the present disclosure;
FIG. 3 illustrates a partially enlarged view of a part A in FIG. 2;
FIG. 4 illustrates a diagrammatic view of a pressure plate of the cleaning assembly of the present disclosure;
FIG. 5 illustrates a diagrammatic view of the pressure plate of the cleaning assembly of the present disclosure from another angle;
FIG. 6 illustrates a sectional view of the pressure plate of the cleaning assembly of the present disclosure;
FIG. 7 illustrates a sectional view of an upper cover of the cleaning assembly of the present disclosure;
FIG. 8 illustrates a diagrammatic view of a lower cover of the cleaning assembly of the present disclosure;
FIG. 9 illustrates a diagrammatic view of a nozzle cover of the cleaning assembly of the present disclosure;
FIG. 10 is a sectional view of the nozzle cover of the cleaning assembly of the present disclosure;
FIG. 11 illustrates a diagrammatic view of the cleaning assembly of the present disclosure in an initial state;
FIG. 12A illustrates a first diagrammatic view of the cleaning assembly of the present disclosure when a spray bar portion extends;
FIG. 12B illustrates a second diagrammatic view of the cleaning assembly of the present disclosure when the spray bar portion extends;
FIG. 12C illustrates a third diagrammatic view of the cleaning assembly of the present disclosure when the spray bar portion extends;
FIG. 13A illustrates a first diagrammatic view of the cleaning assembly of the present disclosure when the spray bar portion retracts;
FIG. 13B illustrates a second diagrammatic view of the cleaning assembly of the present disclosure when the spray bar portion retracts;
FIG. 13C illustrates a third diagrammatic view of the cleaning assembly of the present disclosure when the spray bar portion retracts;

In the drawings, bracket 10; guide portion 101; guide hole 1011; avoidance groove 1012; position-limiting portion 1013; spray bar portion 20; transmission portion 201; self-cleaning assembly 30; upper cover 301; cleaning hole 3011; third installation position 3012; boss 3013; groove 3014; slot 3015; lower cover 302; through hole 3021; fixing portion 3022; pressure plate 40; actuating portion 401; first driving surface 4011; second driving surface 4012; transition portion 4013; first installation position 402; buckling hole 4021; fixing hole 4022; second installation position 403; first buckle 404; second buckle 405; fixing surface 4051; descaling piece 50; reset device 60; sealing piece 70; nozzle cover 80; nozzle 801; water passage 802; rib 803; driving motor 901; conveyor belt 902; and transition gear 903.

### DETAILED DESCRIPTION OF THE EMBODIMENTS

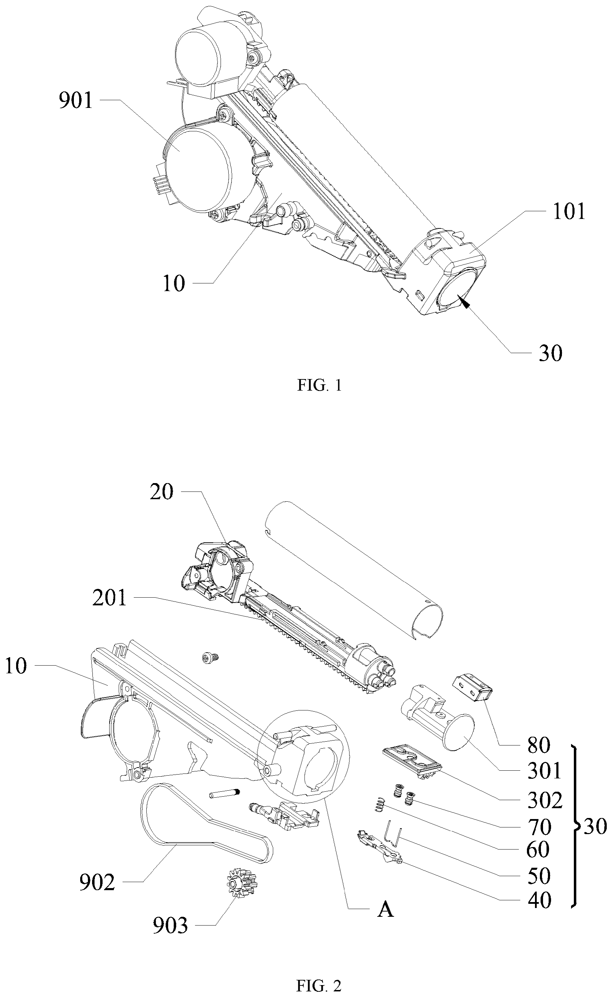

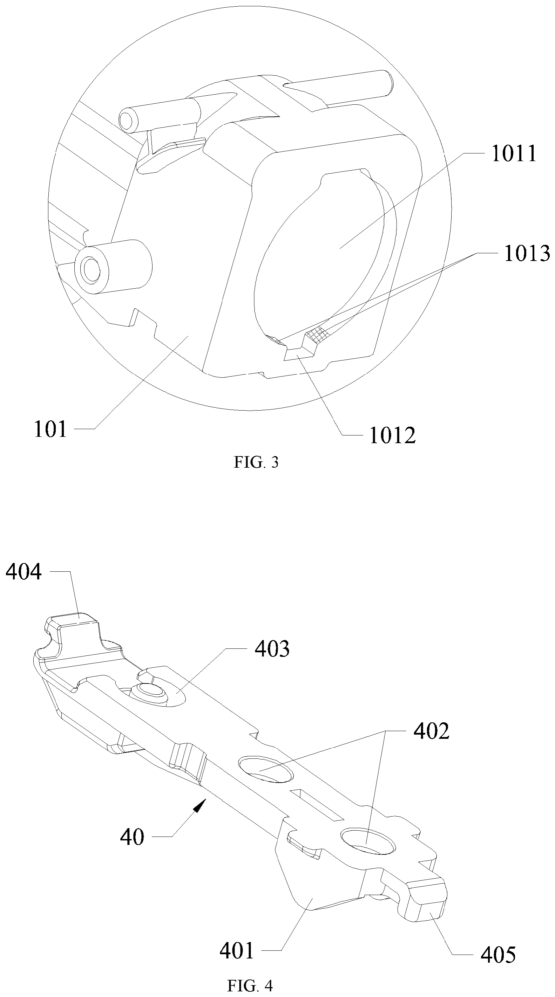

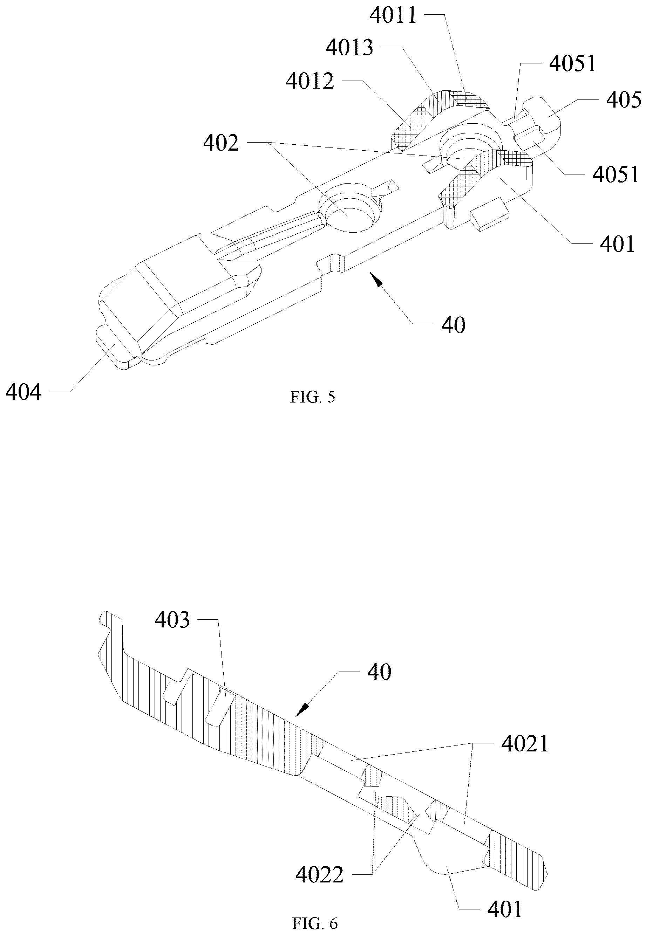

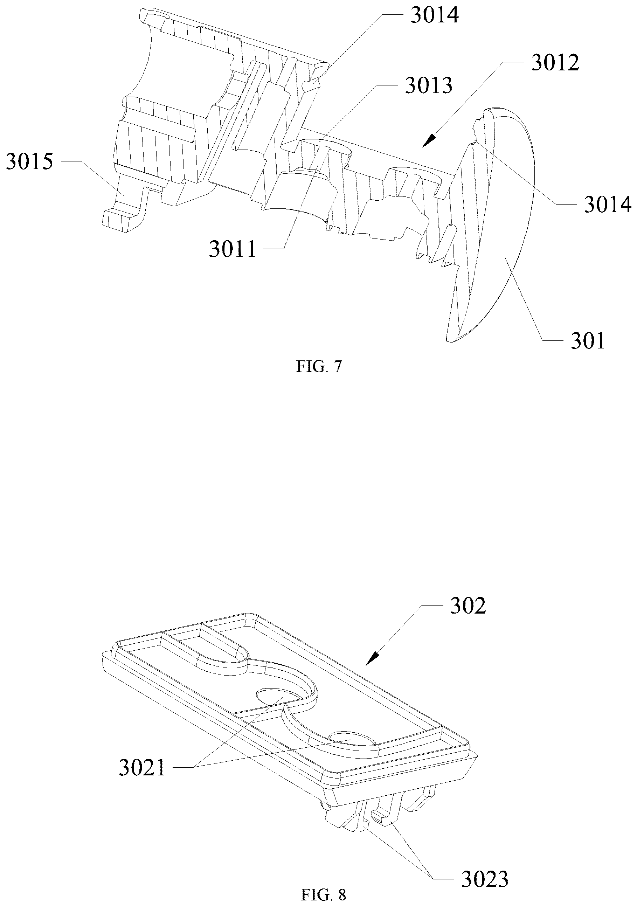

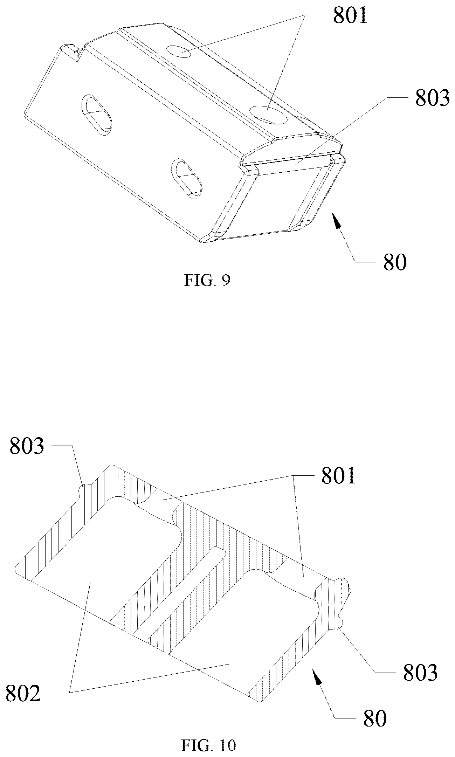

The present disclosure will be described in detail below in combination with FIGS. 1-13.

A cleaning assembly comprises a bracket 10 and a spray bar portion 20 configured to extend and retract on the bracket 10, a front end of the spray bar portion 20 is disposed with a self-cleaning assembly 30 configured to extend and retract accordingly, the self-cleaning assembly 30 comprises an upper cover 301 and a pressure plate 40, the upper cover 301 comprises cleaning holes 3011 and a slot 3015, one end of the pressure plate 40 is pivotally connected to an inner side of the slot 3015 and is located on an outer side of the upper cover 301, an actuating portion 401 is disposed on another end of the pressure plate 40, a reset device 60 is disposed between the pressure plate 40 and the upper cover 301, at least one descaling piece 50 is disposed on the pressure plate 40, a position-limiting portion 1013 configured to abut the actuating portion 401 is disposed on the bracket 10, and the position-limiting portion 1013 is located on a path along which the self-cleaning assembly 30 extends or retracts with the spray bar portion 20; and when the spray bar portion 20 drives the self-cleaning assembly 30 to extend and retract, the actuating portion 401 of the pressure plate 40 abuts the position-limiting portion 1013, causing the pressure plate 40 to swing around the slot 3015 in a direction towards the upper cover 301, thus inserting descaling pieces 50 into the cleaning holes 3011, when the actuating portion 401 is separated from the position-limiting portion 1013 during an extension-retraction process, and the reset device 60 pulls the descaling pieces 50 out of the cleaning holes 3011 completely.

Therefore, the actuating portion 401 of the pressure plate 40 respectively abuts the position-limiting portion 1013 during the extension-retraction process, so that the position-limiting portion 1013 respectively pushes the pressure plate 40 to swing in the direction towards the upper cover 301 during the extension-retraction process of the pressure plate 40, thus respectively inserting the descaling pieces 50 into the cleaning holes 3011 during the extension-retraction process. Therefore, the descaling pieces 50 can clean the cleaning holes 3011 twice in one extension-retraction cycle of the spray bar portion 20, effectively preventing scaling in the cleaning holes 3011.

In this embodiment, the pressure plate 40 is pivotally connected to a bottom of the upper cover 301 through the slot 3015, and the actuating portion 401 is disposed on a lower end surface of the pressure plate 40, so that the pressure plate 40 can abut the position-limiting portion 1013 when extending or retracting with the spray bar portion 20, thereby pushing the pressure plate 40 with the another end swinging upward around the slot 3015 in the direction towards the upper cover 301. In other embodiments, the pressure plate 40 can also be pivotally connected to a top of the upper cover 301 through the slot 3015, and the actuating portion 401 is disposed on an upper end surface of the pressure plate 40, so that the pressure plate 40 can abut the position-limiting portion 1013 when extending or retracting with the spray bar portion 20, thereby pushing the pressure plate 40 with the another end swinging downward around the slot 3015 in the direction towards the upper cover 301.

In this embodiment, front and rear sides of the actuating portion 401 comprise driving surfaces along an extension-retraction direction of the pressure plate 40, and heights of the driving surfaces are higher than that of the position-limiting portion 1013. Further, the driving surfaces comprise a first driving surface 4011 and a second driving surface 4012, and a transition portion 4013 is connected to the first driving surface 4011 and the second driving surface 4012; when the spray bar portion 20 extends, the position-limiting portion 1013 abuts and pushes the first driving surface 4011 to allow the pressure plate 40 to swing upward; when the spray bar portion 20 retracts, the position-limiting portion 1013 abuts and pushes the second driving surface 4012 to allow the pressure plate 40 to swing upward; and when the transition portion 4013 abuts the position-limiting portion 1013, the pressure plate 40 swings upward to a highest point.

In this embodiment, a guide portion 101 is disposed on a front end of the bracket 10, the guide portion 101 comprises a guide hole 1011 configured to allow the spray bar portion 20 to extend and retract, and at least part of an inner wall surface of a bottom of the guide hole 1011 constitutes the position-limiting portion 1013.

In this embodiment, a transmission portion 201 configured for operatively connecting to a driving motor 901 is disposed on a bottom of the spray bar portion 20, the bottom of the guide hole 1011 comprises an avoidance groove 1012 configured for providing a space for the transmission portion 201, the position-limiting portion 1013 is disposed on two sides of the avoidance groove 1012, and the actuating portion is correspondingly disposed on two sides of a bottom of a front end of the pressure plate 40, where the transmission portion 201 is a rack. Specifically, the driving motor 901 is disposed on the bracket 10, one end of a conveyor belt 902 is sleeved on an output end of the driving motor 901, another end of the conveyor belt 902 is sleeved on a transition gear 903, and the transition gear 903 is engaged with the transmission portion 201, so that the spray bar portion 20 extends and retracts through a forward and reverse rotation of the driving motor 901.

In this embodiment, the pressure plate 40 comprises first installation positions 402 and a second installation position 403, the first installation positions 402 are away from the one end of the pressure plate 40 pivotally connected to the slot 3015 and are used for installing the descaling pieces 50, the second installation position 403 is adjacent to the one end of the pressure plate 40 pivotally connected to the slot 3015 and is used for installing the reset device 60; and further, sealing pieces 70 are buckled into the first installation positions 402, and the sealing pieces 70 are sleeved on lower portions of the descaling pieces 50.

In this embodiment, the descaling pieces 50 are descaling needles, one end of which has a bent shape, and the other end has a straight shape. The first installation positions 402 comprise buckling holes 4021 and fixing holes 4022, and side walls of the buckling holes 4021 comprise protrusions. The descaling pieces 50 are disposed in the buckling holes 4021, the one end of which having the bent shape is inserted into the fixing holes 4022, at the same time, the sealing pieces 70 are buckled in the buckling holes 4021 through the protrusions and are sleeved outside of the descaling pieces 50. Specifically, a number of the first installation positions 402 is 2, which can be increased or decreased according to actual needs. A descaling piece 50 is disposed in each of the first installation positions 402, a sealing piece 70 is sleeved outside of each of the descaling pieces 50, and the sealing piece 70 is buckled in a corresponding one of the first installation positions 402. The second installation position 403 is groove-shaped and used for fixing a lower end of the reset device 60, the reset device 60 is a spring, the reset device 60 is used to ensure that the descaling pieces 50 can return to initial positions after being inserted into the cleaning holes 3011 for dredging and cleaning.

In this embodiment, a lower end of the upper cover 301 is connected to a lower cover 302, the lower cover 302 comprises through holes 3021 and an accommodating groove, the sealing pieces 70 slidably and hermetically cooperate with inner sides of the through holes 3021, and the accommodating groove cooperates with the second installation position 403 to fix an upper end and the lower end of the reset device 60 respectively, ensuring that a position of the reset device 60 does not dislocate during an operation process; and further, parts of the sealing pieces 70 disposed in the through holes 3021 are Y-shaped, thus reducing frictional resistance forces of the sealing pieces 70 with inner walls of the through holes 3021 during a sliding process while ensuring sealing.

In this embodiment, a front end of the lower cover 302 comprises a fixing portion 3022, the pressure plate 40 comprises a first buckle 404 and a second buckle 405 along a length direction respectively, the first buckle 404 is connected to the lower end of the upper cover 301, facilitating the pressure plate 40 to swing around the first buckle 404 when the actuating portion is pushed by the position-limiting portion 1013, the second buckle 405 is overlapped with the fixing portion 3022, and the fixing portion 3022 is used to limit an initial position of the pressure plate 40. Further, the fixing portion 3022 comprises two buckles with opposite hooks, and the second buckle 405 comprises fixing surfaces 4051 overlapped with the hooks.

In this embodiment, an upper end of the upper cover 301 comprises a third installation position 3012 for installing a nozzle cover 80, and the nozzle cover 80 comprises nozzles 801 in communication with the cleaning holes 3011. Specifically, the nozzle cover 80 comprises the nozzles 801 and water passages 802, which are in communication with each other, a bottom wall of the third installation position 3012 comprises bosses 3013, the bosses 3013 comprise the cleaning holes 3011, and the water passages 802 are sleeved outside of the bosses 3013; and front and rear side walls of the third installation position 3012 comprise a groove 3014, and front and rear side walls of the nozzle cover 80 comprise a rib 803 configured to be buckled in the groove 3014.

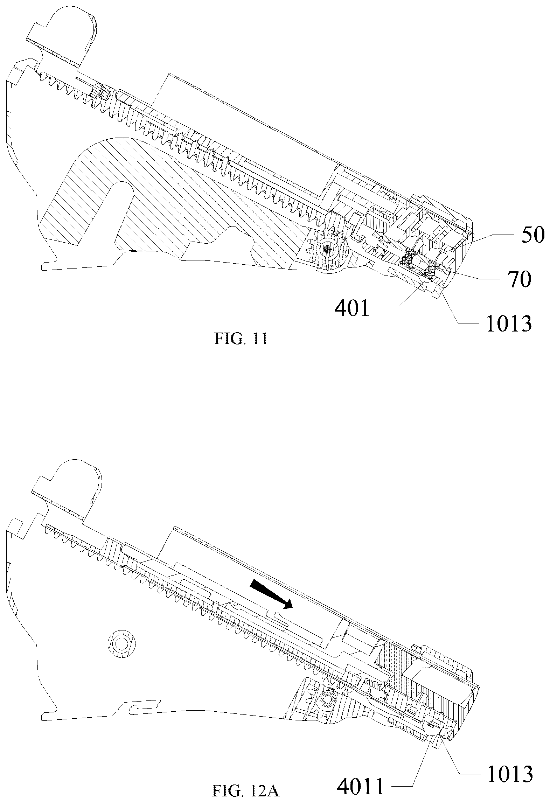

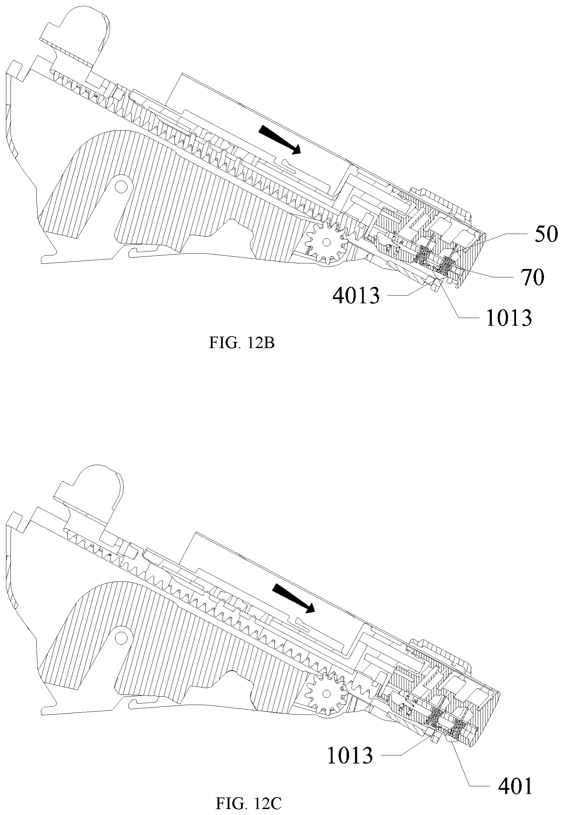

A working principle of the cleaning assembly disclosed in the present disclosure is as follows:
For an example, the first buckle 404 of the pressure plate 40 is pivotally connected to a lower side of the upper cover 301. The driving motor 901 starts to rotate forward to allow the spray bar portion 20 to extend forward, and the self-cleaning assembly 30 moves forward with the spray bar portion 20. The first driving surface 4011 of the actuating portion abuts the position-limiting portion 1013, as shown in FIG. 12A; the self-cleaning assembly 30 continues to move forward with the spray bar portion 20, and the position-limiting portion 1013 pushes the pressure plate 40 to swing upward around the slot 3015 through the first driving surface 4011 until the transition portion 4013 abuts the position-limiting portion 1013, allowing the sealing pieces 70 disposed on the pressure plate 40 to slide upward in the through holes 3021 and the descaling pieces 50 to move upward to be inserted into the cleaning holes 3011, at this time, the pressure plate 40 swings upward to the highest point, thereby dredging and cleaning the cleaning holes 3011, as shown in FIG. 12B; and the self-cleaning assembly 30 continues to move forward with the spray bar portion 20, the actuating portion is separated from the position-limiting portion 1013, the pressure plate 40 swings downward to drive the sealing pieces 70 to slide downward in the through holes 3021 under an action of the reset device 60 until the second buckle 405 abuts the hooks of the lower cover 302, and the descaling pieces 50 are then pulled out of the cleaning holes 3011, as shown in FIG. 12C. Thus, a primary dredging and cleaning of the cleaning holes 3011 is completed.

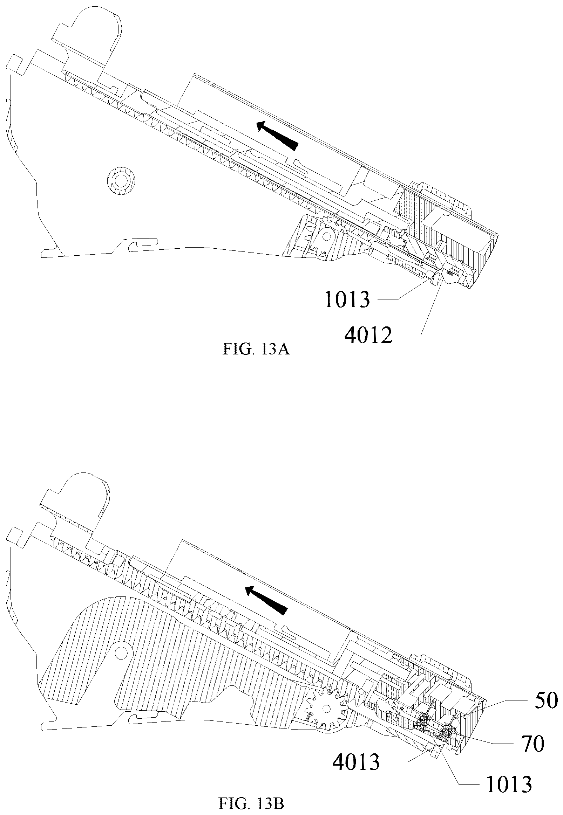

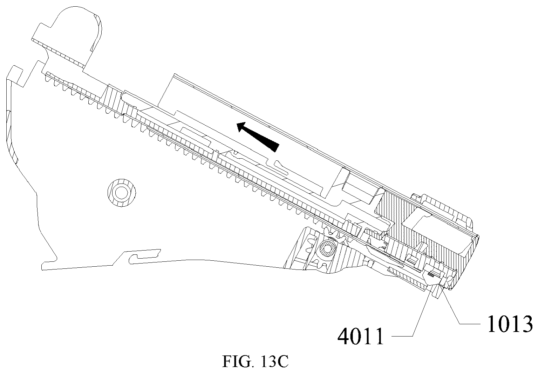

The driving motor 901 starts to rotate reverse to allow the spray bar portion 20 to retract backward, and the self-cleaning assembly 30 retracts backward with the spray bar portion 20. The second driving surface 4012 of the actuating portion abuts the position-limiting portion 1013, as shown in FIG. 13A; the self-cleaning assembly 30 continues to move backward with the spray bar portion 20, and the position-limiting portion 1013 pushes the pressure plate 40 to swing upward around the slot 3015 through the second driving surface 4012 until the transition portion 4013 abuts the position-limiting portion 1013, allowing the sealing pieces 70 disposed on the pressure plate 40 to slide upward in the through holes 3021 and the descaling pieces 50 to move upward to be inserted into the cleaning holes 3011, at this time, the pressure plate 40 swings upward to the highest point, thereby dredging and cleaning the cleaning holes 3011, as shown in FIG. 13B; and the self-cleaning assembly 30 continues to move backward with the spray bar portion 20, the actuating portion is separated from the position-limiting portion 1013, the pressure plate 40 swings downward to drive the sealing pieces 70 to slide downward in the through holes 3021 under the action of the reset device 60 until the second buckle 405 abuts the hooks of the lower cover 302, and the descaling pieces 50 are pulled out of the cleaning holes 3011, as shown in FIG. 13C. Thus, a secondary dredging and cleaning of the cleaning hole 3011 is completed.

Therefore, once a user uses the spray bar portion 20, the self-cleaning assembly 30 will be respectively inserted into the cleaning holes 3011 for dredging and cleaning during the extension-retraction process of the spray bar portion 20, that is, the cleaning holes 3011 will be dredged and cleaned twice each time the user uses the spray bar portion 20, continuously maintaining the cleaning holes 3011 in an unblocked state, and ensuring the self-cleaning function of the nozzles 801 to be normally operated.

The preceding embodiments are merely provided to illustrate the technical concept and the features of the present disclosure, allowing the content of the present disclosure to be understood and implemented by those of skill in the art, and the protection scope of the present disclosure should not be limited thereto. It is intended that the protective scope of the present disclosure cover any of equivalent variations or modifications provided it is made in accordance with the spirit and essence of the present disclosure.

### INDUSTRIAL APPLICABILITY

A cleaning assembly, which comprises a bracket and a spray bar portion configured to extend and retract on the bracket, a front end of the spray bar portion is disposed with a self-cleaning assembly, the self-cleaning assembly comprises an upper cover and a pressure plate, the upper cover comprises one or more cleaning holes, one end of the pressure plate is pivotally connected to a lower side of the upper cover, a reset device is disposed between the pressure plate and the upper cover, one or more descaling pieces are further disposed on the pressure plate, and a position-limiting portion is disposed on the bracket; and when the spray bar portion extends and retracts, the pressure plate abuts the position-limiting portion, causing the pressure plate to swing upward around a hinged position with the upper cover, thus inserting the one or more descaling pieces into the one or more cleaning holes, after the pressure plate is separated from the position-limiting portion, and the reset device pulls the one or more descaling pieces out of the one or more cleaning holes to have an industrial applicability.

## Claims

1. A cleaning assembly, comprising a bracket and a spray bar portion configured to extend and retract on the bracket, **characterized in that**, a front end of the spray bar portion is disposed with a self-cleaning assembly configured to extend and retract accordingly, the self-cleaning assembly comprises an upper cover and a pressure plate, the upper cover comprises one or more cleaning holes and a slot, one end of the pressure plate is pivotally connected to an inner side of the slot and is located on an outer side of the upper cover, an actuating portion is disposed on another end of the pressure plate, a reset device is disposed between the pressure plate and the upper cover, one or more descaling pieces are further disposed on the pressure plate, a position-limiting portion configured to abut the actuating portion is disposed on the bracket, the position-limiting portion is located on a path along which the self-cleaning assembly extends and retracts with the spray bar portion; and when the spray bar portion drives the self-cleaning assembly to extend and retract, the actuating portion of the pressure plate abuts the position-limiting portion, causing the pressure plate to swing around the slot in a direction towards the upper cover, the one or more descaling pieces are inserted into the one or more cleaning holes, the actuating portion is separated from the position-limiting portion in a continuous extension-retraction process, and the reset device pulls the one or more descaling pieces out of the one or more cleaning holes completely.

2. The cleaning assembly according to claim 1, **characterized in that**, the pressure plate is pivotally connected to a bottom of the upper cover through the slot, and the actuating portion is disposed on a lower end surface of the pressure plate, so that the pressure plate is configured to abut the position-limiting portion when extending and retracting with the spray bar portion, thereby pushing the pressure plate with the another end swinging about the slot in the direction towards the upper cover.

3. The cleaning assembly according to claims 2, **characterized in that**, driving surfaces are disposed on front and rear sides of the actuating portion along an extension-retraction direction of the pressure plate, and heights of the driving surfaces are higher than that of the position-limiting portion.

4. The cleaning assembly according to claim 3, **characterized in that**, the driving surfaces comprise a first driving surface and a second driving surface, and a transition portion is connected to the first driving surface and the second driving surface; when the spray bar portion extends, the position-limiting portion abuts and pushes the first driving surface to allow the pressure plate to swing upward; when the spray bar portion retracts, the position-limiting portion abuts and pushes the second driving surface to allow the pressure plate to swing upward; and when the transition portion abuts the position-limiting portion, the pressure plate swings upward to a highest point.

5. The cleaning assembly according to claim 1, **characterized in that**, a guide portion is disposed on a front end of the bracket, the guide portion comprises a guide hole configured to allow the spray bar portion to extend and retract, and at least part of an inner wall surface of a bottom of the guide hole constitutes the position-limiting portion.

6. The cleaning assembly according to claim 1, **characterized in that**, the pressure plate comprises one or more first installation positions and a second installation position, the one or more first installation positions are away from the one end of the pressure plate pivotally connected to the slot and are used for installing the one or more descaling pieces, and the second installation position is adjacent to the one end of the pressure plate pivotally connected to the slot and is used for installing the reset device.

7. The cleaning assembly according to claim 6, **characterized in that**, one or more sealing pieces are buckled into the one or more first installation positions, and the one or more sealing pieces are sleeved on one or more lower portions of the one or more descaling pieces.

8. The cleaning assembly according to claim 7, **characterized in that**, a lower end of the upper cover is connected to a lower cover, the lower cover comprises one or more through holes and an accommodating groove, the one or more sealing pieces slidably and hermetically cooperate with one or more inner sides of the one or more through holes, and the accommodating groove cooperates with the second installation position to fix an upper end and a lower end of the reset device respectively.

9. The cleaning assembly according to claim 8, **characterized in that**, one or more parts of the one or more sealing pieces disposed in the one or more through holes are Y-shaped.

10. The cleaning assembly according to claim 8, **characterized in that**, a front end of the lower cover comprises a fixing portion, the one end of the pressure plate comprises a first buckle, the another end comprises a second buckle, the second installation position is adjacent to the first buckle, the actuating portion and the one or more first installation positions are adjacent to the second buckle, and the first buckle is pivotally connected to the slot, and the second buckle is overlapped with the fixing portion.

11. The cleaning assembly according to claim 10, **characterized in that**, the fixing portion comprises two buckles with opposite hooks, and the second buckle comprises a fixing surface overlapped with the hooks.

12. The cleaning assembly according to claim 1, **characterized in that**, an upper end of the upper cover comprises a third installation position for installing a nozzle cover, and the nozzle cover comprises nozzles in communication with the one or more cleaning holes.
